# EUROPÄISCHE PATENTSCHRIFT

(11) **EP 0 338 217 B1**
(45) Veröffentlichungstag und Bekanntmachung des Hinweises auf die Patenterteilung: **10.02.1993**
(21) Anmeldenummer: 89103334.2
(22) Anmeldetag: 25.02.1989
(51) Int. Cl.: B23B 5/02, B23B 5/04, B23B 5/32

(54) **Hilfseinrichtung für die Bremsscheibenbearbeitung eines Eisenbahn-Radsatzes auf einer Radsatzdrehmaschine**
Auxiliary device for working the brake discs of a railway wheel pair on a railway wheel lathe
Dispositif auxiliaire pour l'usinage de freins à disque d'une paire de roue de chemin de fer sur un tour à roue

(30) Priorität: 22.04.1988 DE 3813818
(43) Veröffentlichungstag der Anmeldung: 25.10.1989
(73) Patentinhaber: Hoesch Maschinenfabrik Deutschland Aktiengesellschaft, 44145 Dortmund (DE)
(72) Erfinder: Brinkmann, Dirk, Dipl.-Ing., D-4670 Lünen (DE); Reske, Wilfried, D-5840 Schwerte 3 (DE); Reyer, Manfred, Dipl.-Ing., D-4600 Dortmund 30 (DE); Rosen, Günter, D-4600 Dortmund 50 (DE)

(56) Entgegenhaltungen:
- DE-A- 1 477 422
- DE-C- 1 000 208
- US-A- 4 523 499
- RATP Etudes-Projets/4 ,Nr 10-12, 1985, S. 18-34

## Beschreibung

Die Erfindung bezieht sich auf eine Radsatzdrehmaschine zum Reprofilieren der Laufräder von Eisenbahn-Radsätzen, mit einem Radsatzantrieb und zwei antreibbaren Drehsupporten, die je einen Längs- und einen Planschlitten sowie ein Drehwerkzeug enthalten, mit einer Hilfseinrichtung für das Bearbeiten der auf den Eisenbahn-Radsätzen angeordneten Bremsscheiben, wobei die Hilfseinrichtung zwei Bearbeitungsvorrichtungen mit je zwei Drehwerkzeugen aufweist und wobei jede Bearbeitungsvorrichtung auf einen Planschieber montierbar ist.

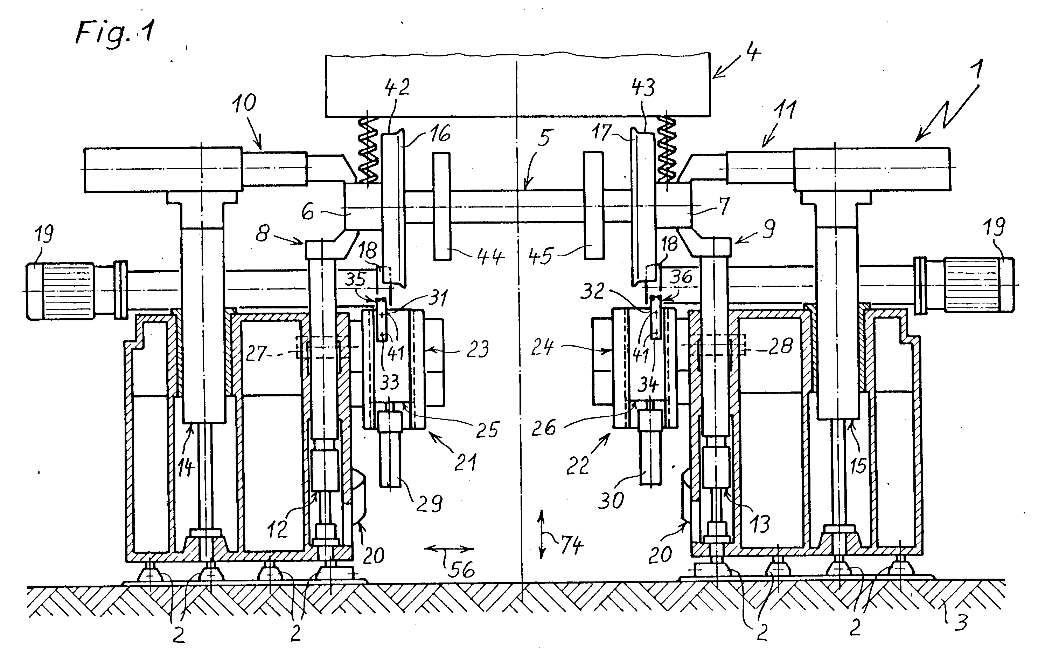

Eine Radsatzdrehmaschine der vorgenannten Art gehört zum Stand der Technik (FR-Revue "RATP-Etudes/Projets", Paris, Nr. 10-12, 1985, S. 18-34, Abb. 1, 11, 21 und 23).

Eine in einer solchen Radsatzdrehmaschine eingesetzte Hilfseinrichtung kann die Bearbeitung der Bremsscheiben eines Eisenbahn-Radsatzes nicht mit großen Schnittkräften durchführen, da die Schnittkraftableitung von den Drehwerkzeugen zu den Planschlitten ungünstig ist. Hierdurch muß eine verhältnismäßig lange Bearbeitungszeit in Kauf genommen werden.

Der Erfindung liegt die Aufgabe zugrunde, die Hilfseinrichtung für eine Radsatzdrehmaschine der eingangs genannten Art so auszubilden, daß sie die Bremsscheibenbearbeitung mit großen Schnittkräften ermöglicht.

Erfindungsgemäß wird diese Aufgabe dadurch gelöst, daß die Bearbeitungsvorrichtungen der Hilfseinrichtung mit einer teleskopartig ausgeführten Kupplung biegesteif kuppelbar sind.

Im folgenden wird die Erfindung anhand einer Zeichnung, in der ein Ausführungsbeispiel schematisch dargestellt ist, näher beschrieben.

Es zeigt
- Fig. 1: eine Unterflur-Radsatzdrehmaschine mit einem von ihr aufgenommenen Eisenbahn-Radsatz im Längsschnitt mit einer Teilansicht eines auf dem Eisenbahn-Radsatz aufliegenden Fahrzeugaufbaus und mit einem Teilschnitt durch ein Fundament,
- Fig. 2: die Unterflur-Radsatzdrehmaschine mit dem von ihr aufgenommenen Eisenbahn-Radsatz und einer Hilfseinrichtung im Längsschnitt mit der Teilansicht des auf dem Eisenbahn-Radsatz aufliegenden Fahrzeugaufbaus und mit dem Teilschnitt durch das Fundament,

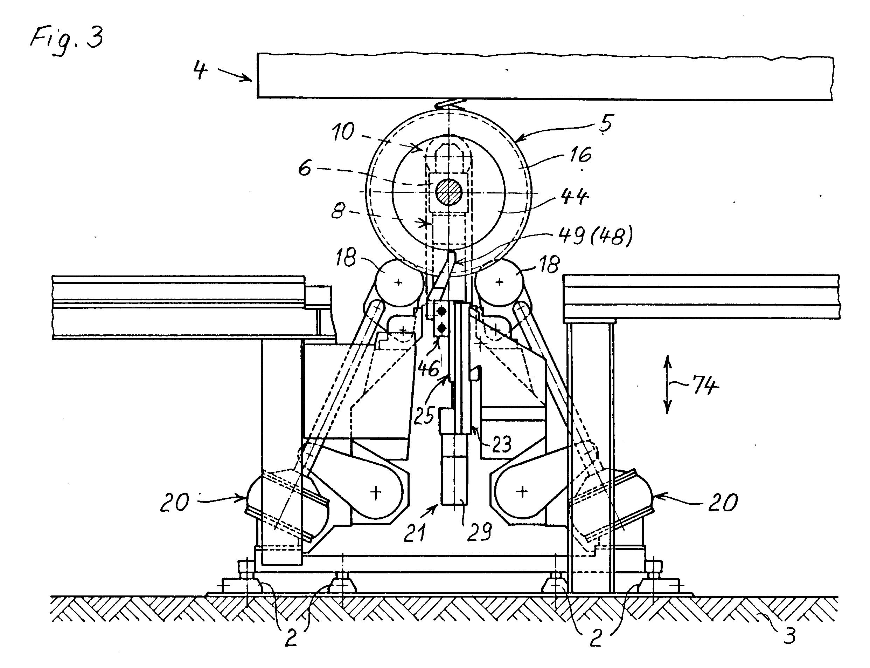

- Fig. 3: einen Schnitt entsprechend der Linie III-III in Fig. 2,
- Fig. 4: einen Teilausschnitt A der Fig. 2 in vergrößertem Maßstab,
- Fig. 5: einen Teilschnitt entsprechend der Linie V-V in Fig. 4 in vergrößertem Maßstab,
- Fig. 6: einen Teilschnitt entsprechend der Linie VI-VI in Fig. 4 in vergrößertem Maßstab.

Eine Unterflur-Radsatzdrehmaschine 1 steht auf mehreren höhen- und seitenverstellbaren Stützelementen 2, die auf einem Fundament 3 angeordnet sind.

Ein in einem Schienenfahrzeug 4 eingebauter Radsatz 5 wird an seinen Achslagerkästen 6, 7 gehalten durch zwei Stützvorrichtungen 8, 9 und zwei Andrückvorrichtungen 10, 11.

Die Stütz- (8, 9) und die Andrückvorrichtungen 10, 11 sind jeweils mit einem Hydraulikzylinder 12, 13, 14, 15 ausgeführt.

An den beiden Laufrädern 16, 17 des Radsatzes 5 greifen je zwei schwenkbar angeordnete Reibrollen 18 an, von denen jede von einem Motor 19 angetrieben wird.

Jeder Reibrolle 18 ist ein Schwenkantrieb 20 zugeordnet.

Die Unterflur-Radsatzdrehmaschine 1 weist zwei Drehsupporte 21, 22 auf, die je mit einem Längs- (23, 24) und einem Planschlitten 25, 26 ausgestattet sind. Jeder Längsschlitten 23, 24 wird angetrieben von einem Motor 27, 28, jeder Planschlitten 25, 26 von einem Motor 29, 30.

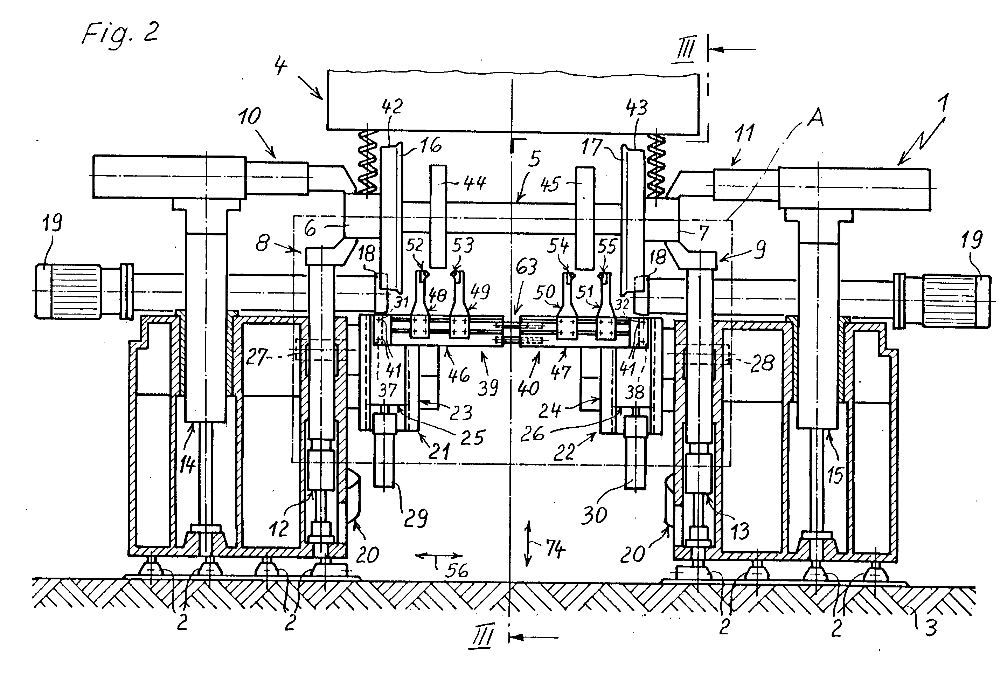

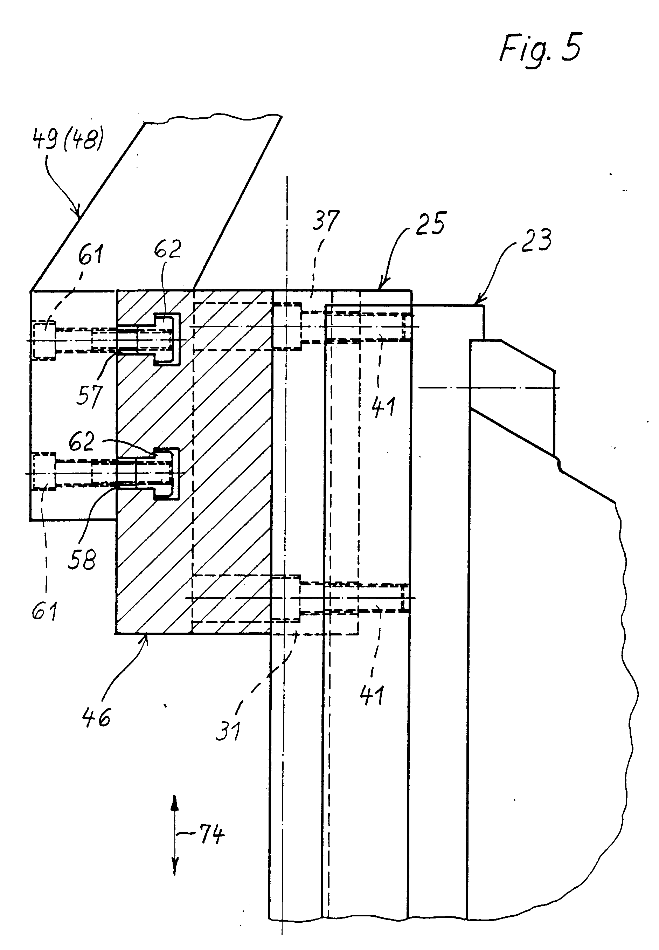

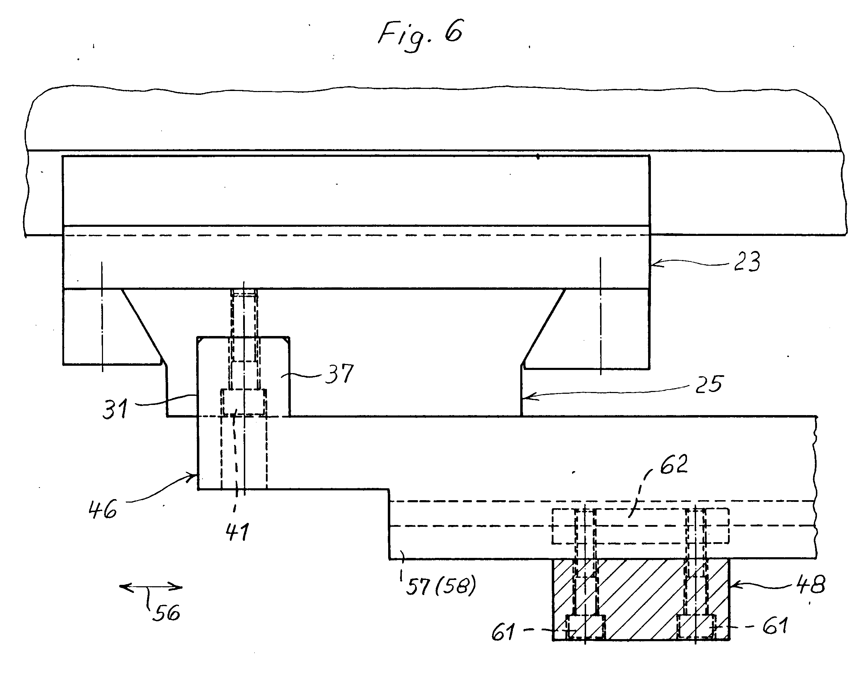

Jeder Planschlitten 25, 26 besitzt eine Kammer 31, 32, die wahlweise der Aufnahme eines Schaftes 33, 34 eines Drehwerkzeuges 35, 36 (Fig. 1) oder eines Ansatzes 37, 38 einer Bearbeitungsvorrichtung 39, 40 (Fig. 2 und 4 bis 6) dient.

Zur Befestigung eines jeden Drehwerkzeuges 35, 36 und einer jeden Bearbeitungsvorrichtung 39, 40 sind zwei Schrauben 41 vorgesehen.

Die Drehwerkzeuge 35, 36 werden eingesetzt bei der Reprofilierung der Radreifenumrisse 42, 43 des Radsatzes 5 (Fig. 1).

Die Bearbeitungsvorrichtungen 39, 40 kommen bei der Bearbeitung der Bremsscheiben 44, 45 des Radsatzes 5 zum Einsatz (Fig. 2).

Jede Bearbeitungsvorrichtung 39, 40 hat einen Tragarm 46, 47, an dem zwei Werkzeughalter 48, 49, 50, 51 befestigt sind. Jeder Werkzeughalter 48 bis 51 ist mit einem Drehwerkzeug 52, 53, 54, 55 bestückt.

Die Tragarme 46, 47 sind jeweils mit zwei parallel zur Längsvorschubrichtung (Doppelpfeil 56) angeordneten T-Nuten 57, 58, 59, 60 versehen.

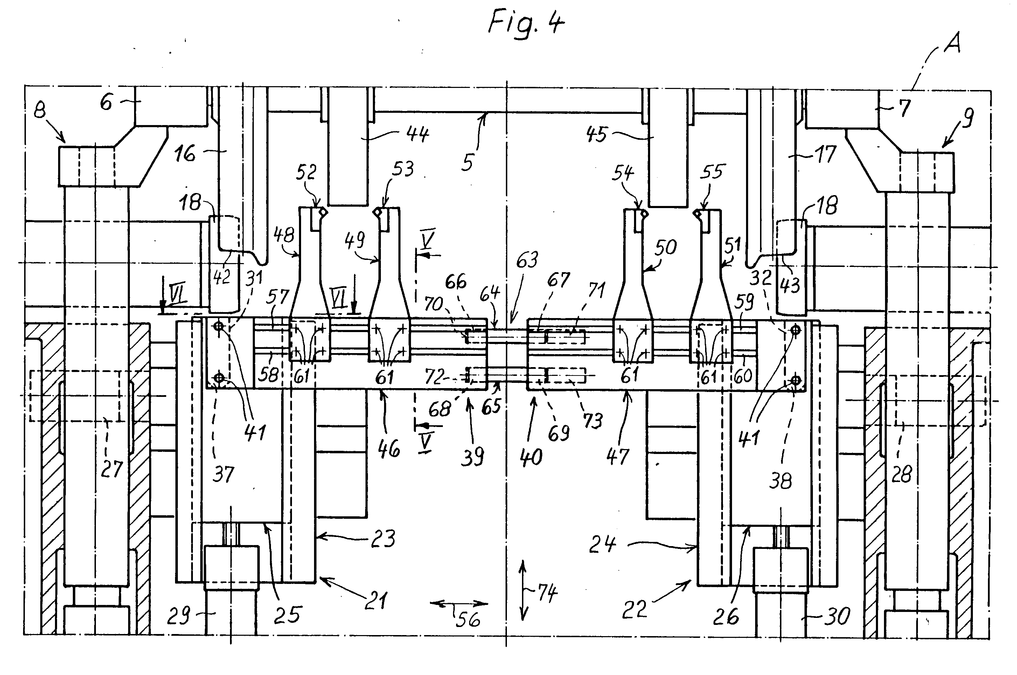

Zum Befestigen der Werkzeughalter 48 bis 51 werden Spannschrauben 61 und T-Nutensteine 62 benutzt (Fig. 4 bis 6).

Beide Bearbeitungsvorrichtungen 39, 40 sind mit einer Kupplung 63 beigesteif kuppelbar.

Die Kupplung 63 enthält zwei parallel zur Längsvorschubrichtung (Doppelfeil 56) angeordnete Rundstangen 64, 65, deren Enden 66, 67, 68, 69 in Sackbohrungen 70, 71, 72, 73 der Tragarme 46, 47 Aufnahme finden.

Die Enden 66, 68 der Rundstangen 64, 65 sind in die Sackbohrungen 70, 72 eingepreßt.

Die Enden 67, 69 der Rundstangen 64, 65 bilden mit den Sackbohrungen 71, 73 ein teleskopartiges Führungssytem.

Bei der Reprofilierung der Radreifenumrisse 42, 43 des Radsatzes 5 werden die Drehsupporte 21, 22 unabhängig voneinander in Längsvorschubrichtung (Doppelpfeil 56) und in Planvorschubrichtung (Doppelpfeil 74) gesteuert.

Demgegenüber werden bei der Bearbeitung der Bremsscheiben 44, 45 des Radsatzes 5 die Drehsupporte 21, 22 so gesteuert, daß die Planschlitten 25, 26 in Planvorschubrichtung (Doppelpfeil 74) eine synchrone Planvorschubbewegung ausführen.

## Patentansprüche

1. Radsatzdrehmaschine zum Reprofilieren der Laufräder (16, 17) von Eisenbahn-Radsätzen (5), mit einem Radsatzantrieb und zwei antreibbaren Drehsupporten (21, 22), die je einen Längs- (23, 24) und einen Planschlitten (25, 26) sowie ein Drehwerkzeug (35, 36) enthalten, mit einer Hilfseinrichtung für das Bearbeiten der auf den Eisenbahn-Radsätzen (5) angeordneten Bremsscheiben (44, 45), wobei die Hilfseinrichtung zwei Bearbeitungsvorrichtungen (39, 40) mit je zwei Drehwerkzeugen (52, 53, 54, 55) aufweist und wobei jede Bearbeitungsvorrichtung (39, 40) auf einen Planschieber (25, 26) montierbar ist, dadurch gekennzeichnet, daß die Bearbeitungsvorrichtungen (39, 40) der Hilfseinrichtung mit einer teleskopartig ausgeführten Kupplung (63) biegesteif kuppelbar sind.

## Claims

1. Wheelset lathe for reprofiling the running wheels (16, 17) of railway wheelsets (5) having a wheelset drive and two drivable lathe slide rests (21, 22) which each contain a longitudinal slide (23, 24) and a cross-slide (25, 26) and a lathe rod (35, 36) and having an auxiliary device for machining the brake discs (44, 45) arranged on the railway wheelsets (5), wherein the auxiliary device has two machining devices (39, 40) each having two lathe tools (52, 53, 54, 55) and wherein each machining device (39, 40) can be mounted on a radially facing slide (25, 26), characterised in that the machining devices (39, 40) of the auxiliary device can be coupled, in such a way that it is resistant to bending, to a telescopic coupling (63).

## Revendications

1. Tour à roues par le reprofilage des roues (16, 17) d'essieux (5) de chemin de fer, avec un entraînement de l'essieu et deux supports rotatifs (21, 22), pouvant être menés, comprenant chacun un chariot longitudinal (23, 24) et chariot transversal (25, 26), de même qu'un outil de tournage (35, 36), avec un dispositif auxiliaire pour travailler les disques de frein (44, 45) prévus sur l'essieu de chemin de fer (5), dans lequel le dispositif auxiliaire comprend deux moyens d'usinage (39, 40) chacun avec deux outils de tournage (52, 53, 54, 55), et dans lequel chaque dispositif d'usinage (39, 40) peut être monté sur un chariot transversal (25, 26), caractérisé en ce que les moyens d'usinage (39, 40) peuvent être accouplés de manière rigide en flexion, au moyen d'un accouplement télescopique (63).
